# EUROPÄISCHE PATENTSCHRIFT

(11) **EP 3 000 563 B1**
(45) Veröffentlichungstag und Bekanntmachung des Hinweises auf die Patenterteilung: **21.06.2017**
(21) Anmeldenummer: 15178052.5
(22) Anmeldetag: 23.07.2015
(51) Int. Cl.: B25F 5/00, B25F 5/02, B23D 49/16, B23D 51/16

(54) **BATTERIEBETRIEBENE HANDWERKZEUGMASCHINE MIT MINDESTENS EINEM ERSTEN GEHÄUSETEIL**
BATTERY POWERED MANUAL POWER TOOL WITH AT LEAST A FIRST HOUSING PART
MACHINE-OUTIL PORTATIVE FONCTIONNANT SUR BATTERIE AYANT AU MOINS UNE PARTIE DE BOITIER

(30) Priorität: 26.09.2014 DE 102014219571
(43) Veröffentlichungstag der Anmeldung: 30.03.2016
(73) Patentinhaber: ROBERT BOSCH GMBH, 70442 Stuttgart (DE)
(72) Erfinder: Esenwein, Florian, 70771 Leinfelden-Echterdingen (DE)

(56) Entgegenhaltungen:
- EP-A1- 1 477 282
- EP-A2- 1 325 790
- WO-A1-2011/035950
- WO-A1-2012/135608
- WO-A1-2014/119211
- DE-A1-102009 018 589
- DE-A1-102009 055 411
- DE-T5-112009 005 440
- DE-U1-202009 010 017
- US-A- 1 948 109
- US-A1- 2005 077 878
- US-A1- 2007 180 711
- US-A1- 2008 315 693
- US-A1- 2013 063 051

## Beschreibung

Die Erfindung betrifft eine batteriebetriebene Stichsäge mit mindestens einem ersten Gehäuseteil.

### Stand der Technik

Aus der DE 11 2009 005 440 T5 und der DE 20 2009 010 017 U1 ist eine gattungsgemäße Handwerkzeugmaschine bekannt.

### Offenbarung der Erfindung

Die erfindungsgemäße batteriebetriebene Stichsäge hat den Vorteil, sehr kompakt und handlich zu sein. Der Vorteil der batteriebetriebenen Stichsäge ist die Erschließung einer neuen Benutzergruppe, insbesondere Frauen und Menschen, welche bisher Vorbehalte und keine Erfahrungen mit Handwerkzeugmaschinen dieser Art hatten.

Erfindungsgemäß ist mindestens eine wiederaufladbare Batterie als Energiequelle für die batteriebetriebene Handwerkzeugmaschine vorgesehen.

Es wird vorgeschlagen, dass die wiederaufladbare Batterie mindestens eine Batteriezelle umfasst. Die mindestens eine Batteriezelle weist nominell eine Batteriespannung auf, die zwischen 2V und 7,5V, insbesondere zwischen 3V und 4,5V liegt, bevorzugt aber 3,6 V beträgt. Nicht berücksichtigt sind hierbei Batteriespannungsschwankungen.

Durch die in den Unteransprüchen angegebenen Merkmale sind vorteilhafte Weiterbildungen der batteriebetriebenen Stichsäge nach dem Anspruch 1 möglich.

Vorteilhafterweise nimmt mindestens ein zweites Gehäuseteil zumindest einen elektromotorischen Antrieb, eine Schubvorrichtung, sowie einen Bearbeitungswerkzeughalter auf. Durch diese Anordnung wird vorteilhafterweise die Kompaktheit der batteriebetriebenen Handwerkzeugmaschine erreicht und damit die Bedienbarkeit signifikant erhöht.

In einer erfindungsgemäßen, vorteilhaften Ausführungsform ist der elektronisch kommutierte Elektromotor über der Schubvorrichtung angeordnet. Durch diese Konstruktion kann kostengünstig Bauraum gespart werden und die batteriebetriebene Handwerkzeugmaschine klein und handlich gebaut werden.

Mindestens das erste Gehäuseteil ist mit dem zweiten Gehäuseteil auf eine vorteilhafte Weise verbunden.

Vorteilhafterweise treibt der elektromotorische Antrieb mindestens eine Motorwelle an, wobei die Motorwelle eine Motorachse definiert, die koaxial zur Motorwelle liegt. Vorteilhafterweise definiert die wiederaufladbare Batterie eine Batterieachse, die insbesondere koaxial zur Einschubrichtung der wiederaufladbaren Batterie liegt. Es wird vorgeschlagen, dass die Motorachse und die Batterieachse insbesondere parallel zueinander liegen. Unter "parallel" soll hier verstanden werden, dass die Motorachse und die Batterieachse in einem Winkel zueinander angeordnet sind, der zwischen 0 und 20° liegt. Diese Angaben berücksichtigen keine Fertigungstoleranzen.

In einer vorteilhaften Ausführungsform definiert die Schubstange eine Hubachse, die winkling, insbesondere rechtwinklig zur Motorachse liegt. Vorteilhafterweise liegt die Hubachse winkelig insbesondere rechtwinklig zur Batterieachse. Diese Angaben berücksichtigen keine Fertigungstoleranzen. Erfindungsgemäß ist das erste Gehäuseteil als Handgriff ausgebildet. Unter einem "Handgriff" soll hier insbesondere ein Bauteil verstanden werden, das im Wesentlichen von einer Hand eines Bedieners der batteriebetriebenen Handwerkzeugmaschine umschlossen werden kann, um die batteriebetriebene Handwerkzeugmaschine zu führen. Bevorzugt liegt das ersten Gehäuseteil dabei im Wesentlichen insgesamt in der Hand eines Bedieners. Dies wird durch die kompakte Bauweise der batteriebetriebenen Handwerkzeugmaschine erreicht.

Vorteilhafterweise weist der Handgriff einen Umfang U_{Handgriff} auf, der zwischen 80 und 170 mm, besonders zwischen 110 und 150 mm liegt, bevorzugt aber 130 mm beträgt. Um einen Handgriff mit diesen Abmessungen können auch kleine Personen, wie Frauen ihre Hände legen und verlieren damit die Scheu vor der Handhabung von batteriebetriebenen Handwerkzeugmaschinen.

Die Kompaktheit der batteriebetriebenen Handwerkzeugmaschine zeigt sich vorteilhafterweise in einer Länge l_{Gehäuse}, die das erste Gehäuseteil aufweist. Die Länge l_{Gehäuse} des ersten Gehäuseteils liegt zwischen 70 mm und 130 mm, besonders zwischen 80 und 115 mm liegt. Bevorzugt beträgt Die Länge l_{Gehäuse} des ersten Gehäuseteils aber 100 mm. Dabei ist die wiederaufladbare Batterie mit einem Großteil einer Länge l_{Batt}, insbesondere mit ihrer gesamten Länge l_{Batt} in das erste Gehäuseteil integriert.

In einer besonders vorteilhaften erfindungsgemäßen Ausführungsform der batteriebetriebenen Handwerkzeugmaschine ist am zweiten Gehäuseteil ein zweiter Handgriff angeordnet. Der Handgriff kann die Form eines ergonomisch geformten Knaufs aufweisen. Hierdurch wird ein unter ergonomischen Gesichtspunkten gut handhabbarer Handgriff, als auch ein in optischer Hinsicht ansprechendes Erscheinungsbild erreicht.

Vorteilhafterweise ist eine ringförmige Leuchtvorrichtung am zweiten Gehäuseteil angeordnet. Damit kann vorteilhaft eine Umgebung wie beispielsweise ein Arbeitsplatz ausgeleuchtet werden.

Weitere Vorteile und zweckmäßige Ausführungen sind der Figurenbeschreibung und den Zeichnungen zu entnehmen.

### Zeichnungen

In den Zeichnungen sind Ausführungsbeispiele einer erfindungsgemäßen Handwerkzeugmaschine gezeigt.

Es zeigen:
- Figur 1: eine erste Ausführungsform einer erfindungsgemäßen Handwerkzeugmaschine in schematischer Darstellung,
- Figur 2: eine zweite Ausführungsform der erfindungsgemäßen Handwerkzeugmaschine in schematischer Darstellung,
- Figur 3: eine dritte Ausführungsform der erfindungsgemäßen Handwerkzeugmaschine in schematischer Darstellung.

### Beschreibung

Für die in den unterschiedlichen Ausführungsbeispielen vorkommenden gleichen Bauteile werden dieselben Bezugszahlen verwendet.

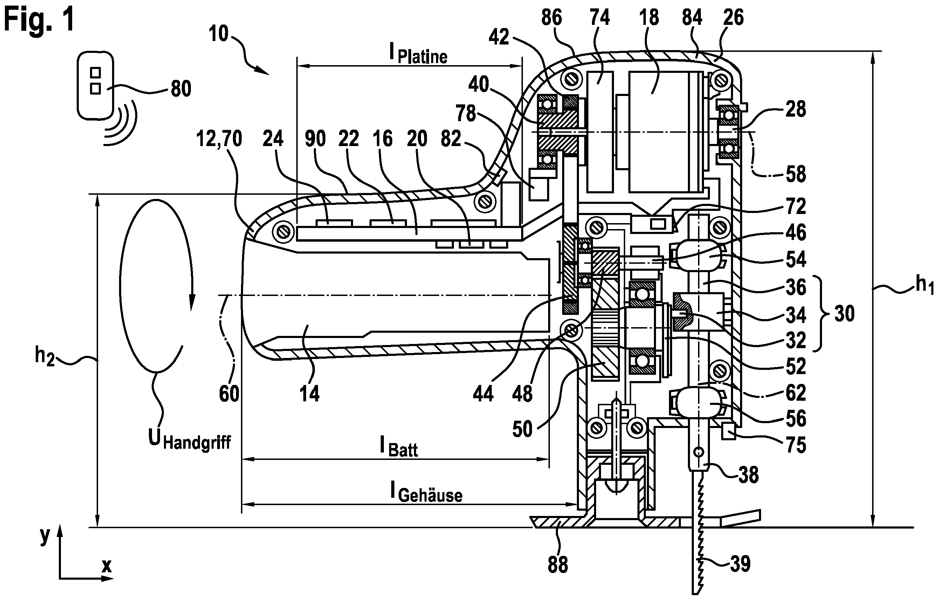

Figur 1 zeigt eine als Stichsäge ausgebildete batteriebetriebene Handwerkzeugmaschine 10.,

In ein erstes Gehäuseteil 12 der batteriebetriebenen Handwerkzeugmaschine 10 kann eine wiederaufladbare Batterie 14 eingeschoben werden. Die wiederaufladbare Batterie 14 ist im montierten Zustand in das erste Gehäuseteil 12 eingesteckt beziehungsweise eingeschoben, wobei die wiederaufladbare Batterie 14 mit ihrer gesamten Batterielänge l_{Batt} in das erste Gehäuseteil 12 eingeschoben ist. Die Einschubrichtung der wiederaufladbaren Batterie 14 verläuft im Wesentlichen koaxial zu einer Haupterstreckungsrichtung x des ersten Gehäuseteils 12. Die wiederaufladbare Batterie 14 dient als Energieversorgung für die batteriebetriebene Handwerkzeugmaschine 10. Die wiederaufladbare Batterie 14 umfasst im Ausführungsbeispiel eine Batteriezelle, die eine nominelle Batteriespannung aufweist, die zwischen 2V und 7,5V, insbesondere zwischen 3V und 4,5V liegt, bevorzugt aber 3,6 V beträgt. Die Werte der Batteriespannung berücksichtigen keine möglichen Batteriespannungsschwankungen. Die Ladespannung kann beispielsweise höher sein, während im Betrieb der batteriebetriebenen Handwerkzeugmaschine 10 die Spannung auf weniger als 3,6V sinkt.

Die Batteriezelle der wiederaufladbaren Batterie 14 ist insbesondere eine Lithium Ionen Batteriezelle. Lithium Ionen Batteriezellen zeichnen sich durch eine hohe Energiedichte und eine thermische Stabilität auch bei hohen Belastungen aus, was eine hohe Leistung bedeutet. Ein weiterer großer Vorteil ist die geringe Selbstentladung, die bewirkt, dass auch die Batteriezellen auch bei längeren Standzeiten einsatzbereit sind. Aus diesen Vorteilen ergeben sich die Vorteile der erfindungsgemäßen Anwendung, insbesondere dass die batteriebetriebene Handwerkzeugmaschine 10 in ihren Abmessungen einerseits klein und kompakt werden kann und andererseits hohe Leistungen bringt.

Es ist aber auch denkbar, dass die wiederaufladbare Batterie 14 aus einer Lithium-Luft-Batteriezelle, einer Lithium-Schwefel-Batteriezelle, einer Lithium-Polymer-Batteriezelle, einer Lithium-Eisen-Phosphat-Batteriezelle, einer Lithium-Titanat-Batteriezelle oder dergleichen besteht. Des Weiteren kann die wiederaufladbare Batterie 14 in einer anderen als der gezeigten geometrischen Ausführung realisiert sein.

Die wiederaufladbare Batterie 14 ist im Ausführungsbeispiel in Figur 1 als auswechselbare wiederaufladbare Batterie 14 ausgeführt. Es ist aber auch denkbar, dass die wiederaufladbare Batterie 14 als integrierte Einheit ausgeführt ist.

Im ersten Gehäuseteil 12 ist weiterhin eine Elektronikeinheit 14 angeordnet. Die Elektronikeinheit 14 ist dazu vorgesehen, einen elektromotorischen Antrieb 18 zu bestromen, zu steuern und/oder zu regeln. Der elektromotorische Antrieb 18 ist als ein elektronisch kommutierter Elektromotor ausgebildet.

Auf der Elektronikeinheit 14 sind Leistungsbauteile 20 und ein Sensorelement 22 angeordnet. Das Sensorelement 22 kann eine physikalische Größe detektieren und die physikalische Größe in ein Sensorsignal umwandeln. Ein Prozessor 24 verarbeitet die Sensorsignale. Die Elektronikeinheit 14 ist dabei mit ihrer Länge l_{Platine} parallel zur Einschubrichtung der wiederaufladbaren Batterie 14 ausgerichtet und verläuft im Wesentlichen koaxial zur Haupterstreckungsrichtung x des ersten Gehäuseteils 12.

Der elektronisch kommutierte Elektromotor 18 ist in einem zweiten Gehäuseteil 26 angeordnet. Der elektronisch kommutierte Elektromotor 18 treibt eine Motorwelle 28 an. Der elektronisch kommutierte Elektromotor 18 ist im Ausführungsbeispiel als Innenläufer ausgeführt. Bei Motoren dieser Art befindet sich ein Stator, der die stromführenden Wicklungen trägt, an einem Motorgehäuse. Ein Rotor, der die Permanentmagnete trägt, ist mit der Motorwelle 28 verbunden. Die Vorteile des Innenläufermotors sind eine hohe zu erreichende Drehzahl bei hoher Leistungsdichte. Es ist aber auch denkbar, dass der elektronisch kommutierte Elektromotor 18 als Außenläufermotor oder als Bürstenmotor ausgeführt ist.

Der elektronisch kommutierte Elektromotor 18 ist über einen Riementrieb mit einer Schubvorrichtung 30 verbunden. Der elektronisch kommutierte Elektromotor 18 ist dabei über der Schubvorrichtung 30 angeordnet ist. Es ist aber auch denkbar, dass der elektronisch kommutierte Elektromotor 18 getriebelos mit der Schubvorrichtung verbunden ist. Unter "getriebelos" soll verstanden werden, dass der elektronisch kommutierte Elektromotor 18 mit der Schubvorrichtung 30 ohne Zwischenschaltung eines konventionellen Getriebes, wie beispielsweise ein Planetengetriebe, Kegelgetriebe oder Stirnradgetriebe verbunden ist. Es ist aber auch denkbar, dass der elektronisch kommutierte Elektromotor 18 über ein konventionelles Getriebe, wie beispielsweise ein Planetengetriebe oder ein Stirnradgetriebe oder dergleichen, mit der Schubvorrichtung verbunden ist.

Die Schubvorrichtung 30 umfasst ein Zapfenelement 32, ein Schubelement 34, sowie eine Schubstange 36. Die Schubstange 36 weist einen Bearbeitungswerkzeughalter 38 auf. Der Bearbeitungswerkzeughalter 38 kann ein Bearbeitungswerkzeug 39 aufnehmen. Das Bearbeitungswerkzeug ist im Ausführungsbeispiel in Figur 1 ein Sägeblatt. Es ist aber auch denkbar, dass das Bearbeitungswerkzeug 38 als eine andere, dem Fachmann als sinnvoll erscheinende, Ausführungsform realisiert ist.

Der Riementrieb umfasst eine erste Riemenscheibe 40, die auf der Motorwelle 18 sitzt. Die erste Riemenscheibe 40 ist über einen Riemen 42 mit einer zweiten Riemenscheibe 44 verbunden, die auf einer zweiten Welle 46 sitzt. Der Riemen 42 überträgt das Drehmoment von der Motorwelle 18 auf die zweiten Welle 46. Auf der zweiten Welle 46 ist ein erstes Zahnrad 48 angeordnet, das mit einem zweiten Zahnrad 50 kämmt. Das zweite Zahnrad 50 ist mit einem Kurbeltrieb 52 verbunden, der mit Hilfe des Zapfenelements 32 in das Schubelement 34 greift. Die Drehbewegung der zweiten Welle 46 wird somit in eine Hubbewegung der Schubvorrichtung 30 umgewandelt. Die Schubstange 36 wird über ein erstes Lager 54 und ein zweites Lager 56 gelagert.

Das erste Gehäuseteil 12 ist mit dem zweiten Gehäuseteil 26 verbunden. Es ist denkbar, dass das erste Gehäuseteil und das zweite Gehäuseteil einstückig oder als separate Bauteileinheiten ausgeführt sind. Sind das erste Gehäuseteil 12 und das zweite Gehäuseteil 26 als separate Bauteileinheiten ausgeführt, erfolgt die Verbindung beider Gehäuseteile 12, 26 üblicherweise durch Verschrauben. Es ist aber auch denkbar, dass beide Gehäuseteile 12, 26 durch andere Verbindungstechniken wie Nieten, Schweißen oder Kleben verbunden sind.

Die Motorwelle 28 definiert eine Motorachse 58. Die Motorachse 58 liegt dabei koaxial zur Motorwelle 28. Die wiederaufladbare Batterie 14 definiert eine Batterieachse 60. Die Batterieachse 60 liegt koaxial zur Einschubrichtung der wiederaufladbaren Batterie 14. Die Motorachse 58 und die Batterieachse 60 liegen im Ausführungsbeispiel der Figur 1 parallel zueinander. Unter "parallel" soll hier verstanden werden, dass die zwei Achsen 58, 60 in einem Winkel zueinander angeordnet sind, der zwischen 0 und 20° liegt. Diese Angaben berücksichtigen keine Fertigungstoleranzen.

Die Schubstange 36 definiert eine Hubachse 62, die winkling, insbesondere rechtwinklig zur Motorachse 58 liegt. Die Hubachse 62 liegt winkling, insbesondere rechtwinklig zur Batterieachse 60. Diese Angaben berücksichtigen keine Fertigungstoleranzen.

Das erste Gehäuseteil 12 bildet einen Handgriff 70 aus. Der Handgriff 70 ist erfindungsgemäß derartig ausgestaltet, dass der Handgriff 70 nahezu in jede Hand, auch in die von ganz kleinen Personen, passt. Unter "ganz klein" soll hier eine Körpergröße von ca. 100 bis 160cm, besonders von ca. 130 bis 140cm verstanden werden. Insbesondere soll der Handgriff 70 von der Hand eines Bedieners nahezu vollständig umschlossen werden können.

In der erfindungsgemäßen Ausgestaltung weist der Handgriff 70 einen Umfang U_{Handgriff} auf, der zwischen 80 und 170mm, besonders zwischen 110 und 150 liegt, bevorzugt aber 130 mm beträgt. Mit diesem Umfang passt die batteriebetriebene Handwerkzeugmaschine 10 in jede Hand. Diese Angaben berücksichtigen keine möglichen Fertigungstoleranzen.

Das erste Gehäuseteil 12 weist eine Länge l_{Gehäuse} auf, die zwischen 70 und 130 mm, besonders zwischen 80 und 115 mm liegt, bevorzugt aber 100 mm beträgt. Dabei ist die wiederaufladbare Batterie 14 mit ihrer gesamten Batterielänge l_{Batt} in das erste Gehäuseteil 12 eingeschoben. Dadurch wird eine kompakte Bauweise der batteriebetriebenen Handwerkzeugmaschine 10 erreicht. Diese Angaben berücksichtigen keine möglichen Fertigungstoleranzen.

Ein Schaltelement 72 ist am zweiten Gehäuseteil 26 der batteriebetriebenen Handwerkzeugmaschine 10 angebracht. Das Schaltelement 72 kann als Kippschalter, als Schiebeschalter, als Taster oder dergleichen ausgeführt sein. Es ist aber auch denkbar, dass der Schalter als Totmannschalter oder als Paddleschalter im Handgriffbereich ausgeführt ist. Eine Arretierung kann den Schalter in einer eingeschalteten Position fixieren.

Bei Betätigung des Schaltelements 72 wird die Elektronikeinheit 16 eingeschaltet.

Die Kühlung spielt bei Handwerkzeugmaschinen mit elektronisch kommutierten Elektromotoren 18 eine immer wichtigere Rolle. Die Kühlung kann passiv oder aktiv ausgeführt sein. Bei der passiven Kühlung erfolgt der Abtransport der thermischen Energie durch Konvektion. Bei aktiver Kühlung wird die thermische Energie der zu kühlenden Komponente mit Hilfe eines Kühlsystems abtransportiert.

Im Ausführungsbeispiel in Figur 1 ist ein Lüfter 74 auf der Motorwelle 28 angebracht und zwischen dem elektronisch kommutierten Elektromotor 18 und der ersten Riemenscheibe 40 angeordnet. Es ist aber auch denkbar, dass der Lüfter 72 nicht an der Motorwelle 28 angebracht ist, sondern über Elemente wie Riemen oder Zahnräder mit der Motorwelle 28 verbunden ist. Genauso gut ist es denkbar, dass andere Kühlsysteme wie Peltierelemente, Kühlkörper, zusätzliche Aktoren mit Luftführungselementen oder dergleichen zum Einsatz kommen.

Im Ausführungsbeispiel in Figur 1 ist am zweiten Gehäuseteil 26 der batteriebetriebenen Handwerkzeugmaschine 10 eine Beleuchtungsvorrichtung 75 angeordnet. Die Beleuchtungsvorrichtung 75 kann auch am ersten Gehäuseteil 12 angeordnet sein. Die Beleuchtungsvorrichtung 75 kann ein Arbeitsfeld ausleuchten, aber auch optische Informationen auf eine Umgebung projizieren. Die Beleuchtungsvorrichtung 75 kann sowohl eine einzelne LED, als auch mehrere LEDs aufweisen. Die LEDs können in verschiedenen Bauformen und Größen vorgesehen sein. Die Beleuchtungsvorrichtung 75 kann aber auch als punktförmige Lichtquelle ausgeführt sein. Es ist aber auch denkbar, dass die Beleuchtungsvorrichtung 75 als Projektionsvorrichtung ausgeführt ist. Die Beleuchtungsvorrichtung 75 kann Beleuchtungselemente aufweisen, die verschiedengestaltig am zweiten Gehäuseteil 26 und/oder am ersten Gehäuseteil 12 angeordnet sein können.

Die Beleuchtungsvorrichtung 75 kann als Lichtleiter ausgeführt sein, der neben einer Ausleuchtung eines Arbeitsbereiches auch einen Schnittverlauf, eine Schnittlinie oder dergleichen anzeigen kann.

Des Weiteren ist die Beleuchtungsvorrichtung 75 dazu vorgesehen, dem Bediener der batteriebetriebenen Handwerkzeugmaschine 10 eine die Parameter der batteriebetriebenen Handwerkzeugmaschine 10 betreffende Anzeige bereitzustellen. Die zur batteriebetriebenen Handwerkzeugmaschine 10 zugehörigen Parameters sind mindestens folgende:
- Eine Kapazität der wiederaufladbaren Batterie 12
- Ein Überlastzustand der batteriebetriebenen Handwerkzeugmaschine 10, insbesondere des elektronisch kommutierten Elektromotors 18, der Elektronikeinheit 16 und/oder der wiederaufladbaren Batterie 14
- Eine Drehzahl des elektronisch kommutierten Elektromotors 18
- Ein Strom, eine Spannung und/oder eine Temperatur des elektronisch kommutierten Elektromotors 18
- Eine Temperatur der Elektronik 16

Die Anzeige der Parameter der batteriebetriebenen Handwerkzeugmaschine 10 kann beispielsweise durch folgende Anzeigemöglichkeiten realisiert werden:
- Eine Änderung der Lichtfarbe
- Eine Änderung der Lichtintensität
- Lichtpulse unterschiedlicher Länge
- Lichtpulse unterschiedlicher Helligkeit
- Lauflicht mit Änderung der Laufrichtung des Lichts
- Lichtpulse, variierend in Pulsfrequenz und/oder Helligkeit

Im Ausführungsbeispiel in Figur 1 liegt die Drehzahl des elektronisch kommutierten Elektromotors 18 zwischen 12000 rpm bis 30000 rpm, besonders zwischen 15000 rpm und 25000 rpm. Bevorzugt beträgt die Drehzahl des elektronisch kommutierten Elektromotors 18 aber 18000 rpm.

Des Weiteren kann die Drehzahl über ein Stellelement reduziert werden. Weiterhin kann über ein Stellelement ein Betriebsmodus, wie beispielsweise ein Ecomodus oder einen Boostmodus zu stellen.

Unter einem "Ecomodus" soll insbesondere eine Modus verstanden werden, in welchem der elektronisch kommutierte Elektromotor besonders effizient betrieben wird. Unter "effizient" soll hier verstanden werden, dass der elektronisch kommutierte Elektromotor im optimalen Arbeitspunkt betrieben wird.

Unter einem "Boostmodus" soll ein Modus verstanden werden, in welchem der elektronisch kommutierte Elektromotor besonders leistungsfähig betrieben wird. Die Leistungsanforderung an den elektronisch kommutierten Elektromotor kann dabei zeitlich begrenzt sein und gegebenenfalls im Überlastbereich des elektronisch kommutierten Elektromotors liegen. Der Boostmodus ist über einen Schalter aktivierbar. Im Boostmodus liegt die Leistungsüberhöhung des elektronisch kommutierten Elektromotors zwischen 10% und 100%, besonders zwischen 20% und 50%, bevorzugt aber bei 33%. Die zeitliche Begrenzung des Boostmodus liegt zwischen 0 und 5min, besonders zwischen 0 und 2,5min. Bevorzugt liegt die zeitliche Begrenzung des Boostmodus zwischen 30s und 1min.

Der Hub der Schubvorrichtung 30 liegt optimalerweise zwischen 1500 und 6000 mm, besonders zwischen 2500 und 5500 mm. Bevorzugt beträgt der Hub der Schubvorrichtung 30 aber 4500 mm.

Die batteriebetriebene Handwerkzeugmaschine 10 weist ein Kommunikationsmodul 78 zur Herstellung einer Datenübertragungsverbindung auf. Das Kommunikationsmodul 78 sendet Daten, die eine umgebungsspezifische Kenngröße und/oder eine werkzeugspezifische Kenngröße und/oder eine bedienerspezifische Kenngröße betreffende Kenngröße charakterisieren, an eine externe Kommunikations- und/oder Datenverarbeitungseinheit 80. Dazu ist die batteriebetriebene Handwerkzeugmaschine 10 mit einer Schnittstelle 82 ausgestattet, die dazu vorgesehen ist, einen Datenaustausch, insbesondere einen elektronischen Datenaustausch zwischen der batteriebetriebene Handwerkzeugmaschine 10, insbesondere der Elektronik 16 der batteriebetriebene Handwerkzeugmaschine 10 und der externen Kommunikations- und/oder Datenverarbeitungseinheit 80 zu ermöglichen. Der Datenaustausch zwischen der Elektronik 16 und der externen Kommunikations- und/oder Datenverarbeitungseinheit 80 erfolgt bevorzugt kabellos, beispielsweise mit Hilfe einer Bluetoothverbindung, Bluetooth Low Energy, einer WLAN-Verbindung, einer NFC-Verbindung, einer Infrarotverbindung oder dergleichen. Die Elektronik 16 steuert und/oder regelt den elektronisch kommutierten Elektromotor 18 bevorzugt in Abhängigkeit der Parameter der batteriebetriebenen Handwerkzeugmaschine 10.

Die externe Kommunikations- und/oder Datenverarbeitungseinheit 80 ist vorzugsweise als Smart Interface, beispielsweise als Smartphone ausgebildet, das eine App zu einer Kommunikation mit der Schnittstelle 82 aufweist. Es ist jedoch auch denkbar, dass die externe Kommunikations- und/oder Datenverarbeitungseinheit 80 als externe, transportable Kommunikations- und/oder Datenverarbeitungseinheit, als fest installierte Kommunikations- und/oder Datenverarbeitungseinheit oder als weitere, einem Fachmann als sinnvoll erscheinende zentrale oder dezentrale Kommunikations- und/oder Datenverarbeitungseinheit ausgebildet ist. Es kann somit vorteilhaft eine Synchronisation von elektronischen Daten ermöglicht werden. In der externen Kommunikations- und/oder Datenverarbeitungseinheit 80 hinterlegte Einstellungen können beispielsweise direkt auf die batteriebetriebene Handwerkzeugmaschine 10 übertragen werden, wie beispielsweise eine eingestellte Drehzahl, eine maximale Leistung oder dergleichen.

Um ein besonders handliche Führung der batteriebetriebenen Handwerkzeugmaschine 10 zu erreichen, ist es von Vorteil, am zweiten Gehäuseteil 26 einen zweiten Handgriff 84 anzuordnen. Der zweite Handgriff 84 ist insbesondere als Knauf ausgebildet, was auch in optischer Hinsicht ein ansprechendes Erscheinungsbild ergibt. Der zweite Handgriff 84 ist derart ausgestaltet, dass er besonders ergonomisch in der Hand des Bedieners liegt.

Eine Höhe h₁ des zweiten Gehäuseteils 26 definiert eine Höhe der batteriebetriebenen Handwerkzeugmaschine 10. Die Höhe h₁ ist dabei durch die geometrische Erstreckung des zweiten Gehäuseteils 26 von einer ersten Handgriffgehäusewand 86 bis zu einer Bodenplatte 88 definiert. Die Höhe h₁ des zweiten Gehäuseteils 26 liegt hierbei zwischen 80 und 130 mm, besonders zwischen 90 und 115 mm. Bevorzugt beträgt die Höhe h₁ des zweiten Gehäuseteils 26 aber 100 mm.

Eine Höhe h₂ des ersten Gehäuseteils 12 ist durch die geometrische Erstreckung von einer zweiten Handgriffgehäusewand 90 bis zur Bodenplatte 88 definiert. Die Höhe h₁ des ersten Gehäuseteils 12 liegt hierbei zwischen 50 und 90 mm, besonders zwischen 60 und 80 mm. Bevorzugt beträgt die Höhe h₂ des ersten Gehäuseteils 12 aber 70 mm.

Die Bodenplatte 88 ist im Ausführungsbeispiel gerade angeordnet. Unter "gerade" soll hier verstanden werden, dass die Bodenplatte 88 in einem Winkel von 90° zur Hubachse 62 angeordnet ist. Es ist aber auch vorstellbar, dass die Bodenplatte 88 in einem Winkel von 0 bis 45° zur Hubachse 62 angeordnet ist. Diese Angaben berücksichtigen keine Fertigungstoleranzen. Eine winklige Anordnung erlaubt insbesondere eine Herstellung von schrägen Schnitten.

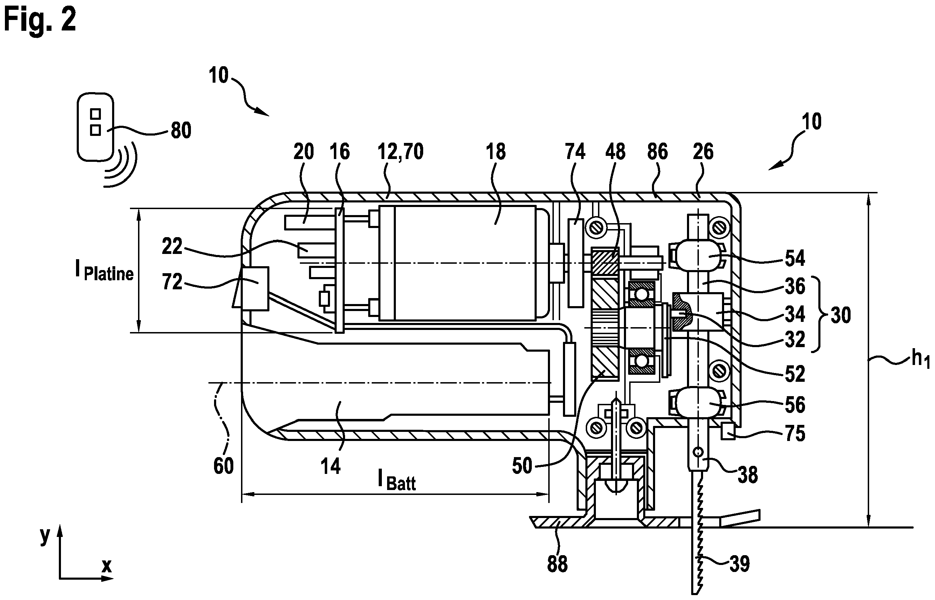

Figur 2 zeigt eine zweite Ausführungsform der batteriebetriebenen Handwerkzeugmaschine 10. Der wesentliche Unterschied zum ersten Ausführungsbeispiel in Figur 1 ist die Anordnung der Elektronikeinheit 16, des elektronisch kommutierten Elektromotors 18 und des Lüfters 74.

Die Elektronikeinheit 16 ist im Ausführungsbeispiel in Figur 2 im ersten Gehäuseteil 12, welches als Handgriff 70 ausgebildet ist, angeordnet. Die Elektronikeinheit 14 ist dabei mit ihrer Länge l_{Platine} winklig, insbesondere rechtwinklig, zur Einschubrichtung der wiederaufladbaren Batterie 14 ausgerichtet und verläuft im Wesentlichen winklig, insbesondere rechtwinklig, zur Haupterstreckungsrichtung x des ersten Gehäuseteils 12.

Der elektronisch kommutierte Elektromotor 18 ist zusammen mit dem Lüfter 74 und dem Schaltelement 72 im Ausführungsbeispiel in Figur 2 ebenfalls im ersten Gehäuseteil 12 angeordnet. Damit ist ein sehr kompakter Aufbau der batteriebetriebenen Handwerkzeugmaschine 10 möglich, da im zweiten Gehäuseteil 26 lediglich die Zahnräder 48, 50, der Kurbeltrieb 51, die Lager 54, 56, die Schubvorrichtung 30 und der Bearbeitungswerkzeughalter 38 untergebracht sind.

Eine Höhe h₁ der batteriebetriebenen Handwerkzeugmaschine 10 ist durch die geometrische Erstreckung der batteriebetriebenen Handwerkzeugmaschine 10 von der ersten Handgriffgehäusewand 86 bis zur Bodenplatte 88 definiert. Die Höhe h₁ der batteriebetriebenen Handwerkzeugmaschine 10 liegt hierbei zwischen 55 und 95 mm, besonders zwischen 65 und 85 mm. Bevorzugt beträgt die Höhe h₁ der batteriebetriebenen Handwerkzeugmaschine 10 aber 75 mm.

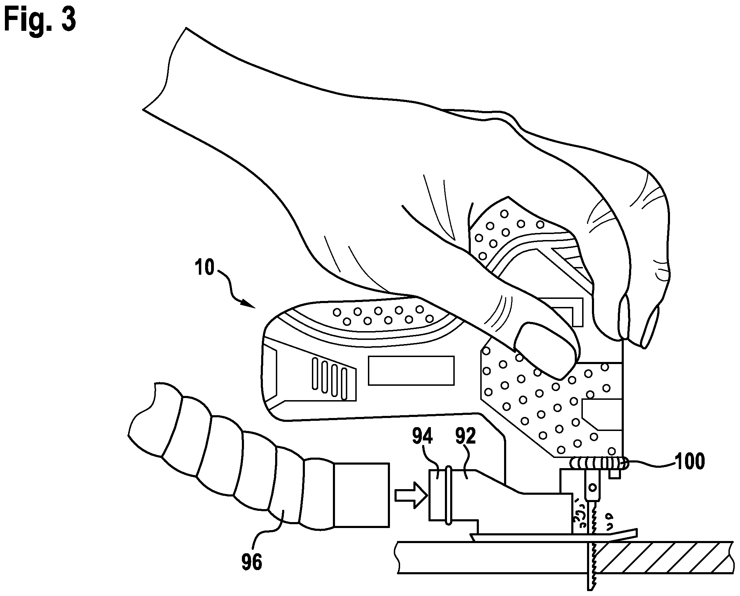

Figur 3 zeigt eine dritte Ausführungsform der batteriebetriebenen Handwerkzeugmaschine 10. Die batteriebetriebene Handwerkzeugmaschine 10 weist eine Absaugvorrichtung 92 für eine Absaugung beispielsweise von partikelförmigen Material auf. Die Absaugvorrichtung 92 weist ein Anschlusselement 94 auf, das insbesondere zur Verbindung der Absaugvorrichtung 92 mit einer externen Staubvorrichtung 96 vorgesehen ist.

Prinzipiell ist es möglich, dass die batteriebetriebene Handwerkzeugmaschine 10 als Pendelhubsäge ausgeführt ist. Die Bewegungen des Bearbeitungswerkzeugs 39 verlaufen stets gleichzeitig in einer vertikalen und in einer horizontalen Richtung. Dabei ist eine der vertikalen Richtungen mit einer der horizontalen Richtungen verknüpft, sodass eine pendelnde Sägebewegung ausgeführt wird.

Am zweiten Gehäuseteil 26 ist auf einer dem Bearbeitungswerkzeughalter 38 zugewandten Seite eine ringförmige Beleuchtungsvorrichtung 100 angeordnet. Die ringförmige Beleuchtungsvorrichtung 100 ist als geschlossener Leuchtring ausgebildet. Die ringförmige Beleuchtungsvorrichtung 100 kann aber auch als nicht geschlossener Leuchtring, wie als Lichtspange ausgeführt sein. Die ringförmige Beleuchtungsvorrichtung 100 kann aber auch am ersten Gehäuseteil 12 angeordnet sein. Die ringförmige Beleuchtungsvorrichtung 100 kann aber auch am Bearbeitungswerkzeughalter 38 angeordnet sein. Die ringförmige Beleuchtungsvorrichtung 100 kann mit dem zweiten Gehäuseteil 26 durch Kleben, Rasten, Klemmen, Clipsen oder dergleichen verbunden sein. Die ringförmige Beleuchtungsvorrichtung 100 kann als Lichtleiter ausgeführt sein. Das von der ringförmigen Beleuchtungsvorrichtung 100 ausgesendete Licht kann unterschiedliche Farben aufweisen. Das von der ringförmigen Beleuchtungsvorrichtung 100 ausgesendete Licht kann in der Helligkeit variieren. Das von der ringförmigen Beleuchtungsvorrichtung 100 ausgesendete Licht kann ein Blinklicht sein, das periodisch die Helligkeit ändert.

## Patentansprüche

1. Batteriebetriebene Stichsäge (10), mit mindestens einem ersten Gehäuseteil (12), das mindestens eine wiederaufladbare Batterie (14) aufnehmen kann, **dadurch gekennzeichnet, dass** die wiederaufladbare Batterie (14) eine Batteriezelle (14) umfasst, die insbesondere eine Spannung von 3,6 V aufweist und dass, das ersten Gehäuseteil (12) einen Handgriff (70) ausbildet, der dazu vorgesehen ist, von einer Hand eines Bedieners vollständig umgriffen zu werden.

2. Batteriebetriebene Stichsäge (10) nach Anspruch 1, **dadurch gekennzeichnet, dass** mindestens ein zweites Gehäuseteil (26) zumindest einen elektromotorischen Antrieb (18), insbesondere einen elektronisch kommutierten Elektromotor (18), eine Schubvorrichtung (30), sowie einen Bearbeitungswerkzeughalter (38) aufnimmt.

3. Batteriebetriebene Stichsäge (10) nach Anspruch 2, **dadurch gekennzeichnet, dass** der elektromotorischen Antrieb (18) über der Schubvorrichtung (30) angeordnet ist.

4. Batteriebetriebene Stichsäge (10) nach Anspruch 3, **dadurch gekennzeichnet, dass** eine Schubstange (36) der Schubvorrichtung (30) eine Hubachse (62) definiert, die winkelig, insbesondere rechtwinklig zur Motorachse (58) der Motorwelle (28) liegt.

5. Batteriebetriebene Stichsäge (10) nach einem der Ansprüche 2 bis 4, **dadurch gekennzeichnet, dass** das erste Gehäuseteil (12) mit dem zweiten Gehäuseteil (26) verbunden ist.

6. Batteriebetriebene Stichsäge (10) nach einem der Ansprüche 2 bis 5, **dadurch gekennzeichnet, dass** der elektromotorische Antrieb (18) mindestens eine Motorwelle (28) antreibt, wobei die Motorwelle (28) eine Motorachse (58) definiert, die koaxial zur Motorwelle (28) liegt, und dass die wiederaufladbare Batterie (14) eine Batterieachse (60) definiert, die insbesondere koaxial zur Einschubrichtung der wiederaufladbaren Batterie (14) liegt, wobei die Motorachse (58) und die Batterieachse (60) im Wesentlichen parallel zueinander liegen.

7. Batteriebetriebene Stichsäge (10) nach Anspruch 1, **dadurch gekennzeichnet, dass** der Handgriff (70) einen Umfang U_{Handgriff} aufweist, der zwischen 80 und 170mm, besonders zwischen 110 und 150mm liegt, bevorzugt aber 130mm beträgt.

8. Batteriebetriebene Stichsäge (10) nach einem der vorhergehenden Ansprüche, **dadurch gekennzeichnet, dass** das erste Gehäuseteil (12) eine Länge l_{Gehäuse} aufweist, die zwischen 70 und 130 mm, besonders zwischen 80 und 115 mm liegt, bevorzugt aber 100 mm beträgt, die wiederaufladbare Batterie (14) mit ihrer gesamten Batterielänge l_{Batt} in das erste Gehäuseteil (12) integriert ist.

9. Batteriebetriebene Stichsäge (10) nach einem der Ansprüche 2 bis 6, **dadurch gekennzeichnet, dass** eine ringförmige Leuchtvorrichtung (100) am zweiten Gehäuseteil (26) angeordnet ist, die dazu vorgesehen ist, insbesondere eine werkzeugnahe Umgebung auszuleuchten.

## Claims

1. Battery operated jigsaw (10) having at least one first housing part (12) which can accommodate at least one rechargeable battery (14), **characterized in that** the rechargeable battery (14) comprises a battery cell (14) which has in particular a voltage of 3.6 V, and **in that** the first housing part (12) forms a handle (70) which is intended to be gripped fully by a hand of an operator.

2. Battery operated jigsaw (10) according to Claim 1, **characterized in that** at least one second housing part (26) accommodates at least one electromotive drive (18), in particular an electronically commutated electric motor (18), a pushing device (30) and a machining tool holder (38).

3. Battery operated jigsaw (10) according to Claim 2, **characterized in that** the electromotive drive (18) is arranged above the pushing device (30).

4. Battery operated jigsaw (10) according to Claim 3, **characterized in that** a pushrod (36) of the pushing device (30) defines a stroke axis (62) which is at an angle, in particular at right angles to the motor axis (58) of the motor shaft (28).

5. Battery operated jigsaw (10) according to one of Claims 2 to 4, **characterized in that** the first housing part (12) is connected to the second housing part (26).

6. Battery operated jigsaw (10) according to one of Claims 2 to 5, **characterized in that** the electromotive drive (18) drives at least one motor shaft (28), wherein the motor shaft (28) defines a motor axis (58) which is coaxial with the motor shaft (28), and **in that** the rechargeable battery (14) defines a battery axis (60) which is in particular coaxial with the insertion direction of the rechargeable battery (14), wherein the motor axis (58) and the battery axis (60) are substantially parallel to one another.

7. Battery operated jigsaw (10) according to Claim 1, **characterized in that** the handle (70) has a perimeter U_{handle} which is between 80 and 170 mm, particularly between 110 and 150 mm, but is preferably 130 mm.

8. Battery operated jigsaw (10) according to one of the preceding claims, **characterized in that** the first housing part (12) has a length l_{housing} which is between 70 and 130 mm, particularly between 80 and 115 mm, but is preferably 100 mm, and the rechargeable battery (14) is integrated into the first housing part (12) with its entire battery length l_{batt}.

9. Battery operated jigsaw (10) according to one of Claims 2 to 6, **characterized in that** an annular illuminating device (100) is arranged on the second housing part (26), said illuminating device (100) being provided to illuminate in particular a surrounding area in the vicinity of the tool.

## Revendications

1. Scie sauteuse fonctionnant sur batterie (10), comportant au moins une première partie de boîtier (12) pouvant recevoir au moins une batterie rechargeable (14), **caractérisée en ce que** la batterie rechargeable (14) comprend un élément de batterie (14) qui présente notamment une tension de 3,6 V et **en ce que** la première partie de boîtier (12) forme une poignée (70) qui est prévue pour être entièrement saisie par la main d'un utilisateur.

2. Scie sauteuse fonctionnant sur batterie (10), **caractérisée en ce qu'**au moins une deuxième partie de boîtier (26) reçoit au moins un entraînement par moteur électrique (18), notamment un moteur électrique (18) commuté électroniquement, un dispositif à poussoir (30) ainsi qu'un porte-outils d'usinage (38).

3. Scie sauteuse fonctionnant sur batterie (10) selon la revendication 2, **caractérisée en ce que** l'entraînement par moteur électrique (18) est disposé au-dessus du dispositif à poussoir (30).

4. Scie sauteuse fonctionnant sur batterie (10) selon la revendication 3, **caractérisée en ce qu'**une tige de poussée (36) du dispositif à poussoir (30) définit un axe de levage (62) qui est disposé de manière à former un certain angle, notamment un angle droit, par rapport à l'axe de moteur (58) de l'arbre moteur (28).

5. Scie sauteuse fonctionnant sur batterie (10) selon l'une quelconque des revendications 2 à 4, **caractérisée en ce que** la première partie de boîtier (12) est reliée à la deuxième partie de boîtier (26).

6. Scie sauteuse fonctionnant sur batterie (10) selon l'une quelconque des revendications 2 à 5, **caractérisée en ce que** l'entraînement par moteur électrique (18) entraîne au moins un arbre moteur (28), dans lequel l'arbre moteur (28) définit un axe de moteur (58) qui est placé de manière coaxiale par rapport à l'arbre moteur (28), et **en ce que** la batterie rechargeable (14) définit un axe de batterie (60) qui est notamment placé de manière coaxiale par rapport à la direction d'introduction de la batterie rechargeable (14), dans lequel l'axe de moteur (58) et l'axe de batterie (60) sont disposés de manière sensiblement parallèle l'un à l'autre.

7. Scie sauteuse fonctionnant sur batterie (10) selon la revendication 1, **caractérisée en ce que** la poignée (70) présente une circonférence U_{Handgriff} qui est comprise entre 80 et 170 mm, notamment entre 110 et 150 mm, mais qui est de préférence égale à 130 mm.

8. Scie sauteuse fonctionnant sur batterie (10) selon l'une quelconque des revendications précédentes, **caractérisée en ce que** la première partie de boîtier (12) présente une longueur l_{Gehäuse} se situant entre 70 et 130 mm, notamment entre 80 et 115 mm, mais qui est de préférence égale à 100 mm et **en ce que** la batterie rechargeable (14) est intégrée sur la totalité de sa longueur de batterie l_{Batt} dans la première partie de boîtier (12).

9. Scie sauteuse fonctionnant sur batterie (10) selon l'une quelconque des revendications 2 à 6, **caractérisée en ce qu'**un dispositif d'éclairage annulaire (100) est disposé sur la deuxième partie de boîtier (26) et **en ce qu'**il est notamment prévu pour éclairer un environnement proche de l'outil.
